# EUROPEAN PATENT SPECIFICATION

(11) **EP 2 878 587 B1**
(45) Date of publication and mention of the grant of the patent: **11.07.2018**
(21) Application number: 14195170.7
(22) Date of filing: 27.11.2014
(51) Int. Cl.: C04B 28/02, C04B 28/06, C04B 28/14

(54) **CEMENTITIOUS MIXTURE ON THE BASIS OF BETA CLINKER**
ZEMENTMISCHUNG AUF BASIS VON BETAKLINKER
MÉLANGE CIMENTAIRE À BASE DE CLINKER BETA

(30) Priority: 27.11.2013 IT TO20130964
(43) Date of publication of application: 03.06.2015
(73) Proprietor: Buzzi Unicem S.p.A., 15033 Casale Monferrato (AL) (IT)
(72) Inventor: Canonico, Fulvio, 10138 Torino (IT); Capelli, Livio, 15030 Rosignano Monferrato (Alessandria) (IT); Bianchi, Manuela, 13039 Trino (Vercelli) (IT)
(74) Representative: Gerbino, Angelo

(56) References cited:
- WO-A1-2012/065976
- FR-A1- 2 873 366
- US-A- 4 036 657
- MIKOV M ET AL: "Effect of calcium sulfoaluminate and gypsum addition on the strength development of belite cementAuteur(s) / Author(s)", AMERICAN CERAMIC SOCIETY BULLETIN, AMERICAN CERAMIC SOCIETY. COLUMBUS, US, vol. 71, no. 7, 1 January 1992 (1992-01-01), pages 1131-1134, XP001526284, ISSN: 0002-7812
- H. EL-DIDAMONY ET AL: "Preparation of [beta]-dicalcium silicate ([beta]-C2S) and calcium sulfoaluminate phases using non-traditional nano-materials", CONSTRUCTION AND BUILDING MATERIALS, vol. 35, 1 October 2012 (2012-10-01), pages 77-83, XP055126082, ISSN: 0950-0618, DOI: 10.1016/j.conbuildmat.2012.02.064

## Description

This invention relates to the sector of cementitious mixtures.

Cementitious mixtures obtained from the combination of Portland cements, sulfoaluminate cements and calcium sulfates are well known and documented in the literature. By virtue of the fast hydration of the C3S present in Portland cement and the consequent generation of Ca(OH)₂, these mixtures are characterised by the formation of expansive ettringite produced by the well-known reaction:

C4A3$ + 8C$H2 + 6CH + 74H -> 3C6A$3H32

As this reaction product is characterised by expansion it gives rise to an action contrasting the natural shrinkage of the concrete. As is known, dicalcium silicate, C2S, does not have any significant part to play in these mixtures.

The so-called belite sulfur aluminate clinkers (BSA), that is clinkers having a high C2S content (> 40%) and a C4A3S content of approximately 30% are also known from the literature (Special Inorganic Cement - I. Odler, E&FN SPON, page 71).

However these materials have very special characteristics and are difficult to use in practice, the final BSA clinker composition being only obtained through the firing of an unprocessed mixture suitably proportioned to form both C4A3S and C2S, with the result that it is difficult to control expansion and final performance as these are influenced by the firing conditions.

The object of this invention is to provide a cementitious mixture whose production cycle requires a smaller energy input, which is an alternative to and more favourable from the energy point of view than those hitherto developed for mixing CAS clinker and Portland cements and more versatile and offering better performance than the BSA solutions developed only for industrial firing, and which has properties suitable for operating requirements.

In accordance with the invention this object is accomplished through a cementitious mixture comprising beta clinker in a quantity of between 25 and 65% by weight, sulfoaluminate clinker in a quantity of between 65 and 25% by weight, and calcium sulfate in a quantity of between 10 and 20% by weight, the said beta clinker having a β-C2S content > 65%, a SO₃ content > 4% and a C3S content < 10%, and the said sulfoaluminate clinker having a C4A3$ concentration > 45%, obviously these latter percentages also being percentages by weight. In addition to this the beta clinker preferably has a C4A3$ content < 5% by weight, and even more preferably < 3% by weight.

This mixture may be obtained either by grinding the components or by mixing after grinding the individual components individually produced by firing.

In particular the inventors have noticed that it is possible to develop a cementitious mixture such as a binder having low incorporated energy, little shrinkage, high workability over time and great strength development, the aforesaid binder being obtained by mixing a clinker with a high beta-C2S content and a very small C3S content using sulfoaluminate clinker (CAS) and calcium sulfate.

Although not containing significant quantities of C3S and therefore exhibiting reduced generation of Ca(OH)₂ during the hydration stage, such a binder is produced by two firing processes, which make it possible to optimise the mineralogical composition (C4A3$ and beta-C2S content), the dimensions of the corresponding crystals, reactivity with water and possibly the fineness of grind, making it possible to obtain mortars and concretes compensated for shrinkage.

Advantageously the beta clinker used in the cementitious binder mixture according to the invention has a CaF₂ content of more than 0, but not greater than 1% by weight.

These binders have many technical advantages, and in particular:
a) high workability, which cannot be achieved with BSA or mixtures obtained from the combination of Portland cements and sulfoaluminate cements unless large quantities of retardant are used, with the disadvantage that there is a fall in mechanical strength;
b) high long-term reactivity because of the presence of large quantities of C2S, a reagent which produces its own hydration products when the ettringite matrix has already developed, offering a more compact structure than that conventionally obtained from mixtures with Portland cement;
c) considerable versatility in the ability to compensate for shrinkage obtained by the fact that these components are mixed and not produced by firing; thus their respective proportions and fineness of grind can be varied as the desired properties vary; and
d) a very small amount of incorporated energy and CO₂ emitted through the use of clinker produced from raw materials containing small quantities of calcium carbonate and fired at temperatures about 150°C lower than those typical for Portland clinkers.

The beta clinker used to produce the cementitious mixture according to the invention can be obtained by firing in a rotating furnace at a clinker-forming temperature of < 1380°C, and has a heat of clinker formation of < 360 kcal/kg, as well as a fineness of 3300 g/cm² ± 500 cm².

The CSA clinker used to produce the cementitious mixture can be obtained by firing in a rotating furnace at a clinker-forming temperature of < 1380°C, and has a fineness of 4500 g/cm² ± 1000 cm².

The comparatively low clinker-forming temperature of the beta clinker and the CSA clinker used, and the small content of calcareous material used in the powder, reduce the energy input required to implement the production cycle, as well as corresponding CO₂ emissions.

The mixture according to the invention may also comprise any combination of the following further ingredients:
a) CaO and/or Ca(OH)₂ in a quantity of up to 5% by weight,
b) one or more lithium salts, such as lithium carbonate, lithium nitrate, lithium sulfate and their mixtures, in a quantity of up to 1% by weight,
c) a retardant for concrete in a quantity up to 2% by weight,
d) a calcareous filler in a quantity up to 15% by weight.

The mixture according to the invention has a significantly lower CO₂ emission factor (at least -20% by weight) in comparison with that typical of cementitious systems based on Portland cements, for comparable performance.

The mixture according to the invention can be used for the production of mortars and concretes having, for example, a water/cementitious mixture ratio by weight of between 0.30 and 0.65, preferably between 0.32 and 0.60, and even more preferably between 0.45 and 0.55, achieving:
- a setting time determined by a Vicat needle of between 3 and 5 hours;
- mechanical strength measured in normal mortars according to standard EN 196-1 of > 8 MPa at 8 hours, > 15 MPa at 24 hours, > 30 MPa at 7 days, and > 50 MPa at 28 days;
- hygrometric shrinkage < 250 µm/m measured at 90 days with 65% relative humidity.

Further advantages and characteristics of this invention will be apparent from the following embodiments provided by way of a non-limiting example in which all the percentages are to be considered percentages by weight unless indicated otherwise.

### EXAMPLES

Table I below shows the compositions of two cementitious mixtures according to the invention (indicated by A and B) and data relating to the development of the respective mechanical strengths over time. Table I also shows composition and data on the development of mechanical strength for a first comparison cementitious mixture (indicated by C) containing a belite clinker having an SO₃ content of 1.7% and a C2S content of 72%, in which the percentage of β-C2S is 17%. Conversely, in the beta clinker in mixtures A and B the SO₃ content is 4.1% and that of β-C2S is 67%. Table I also shows the composition and mechanical strength development data of a second comparison cementitious mixture (indicated by D) containing a BSA clinker produced by firing.

**TABLE I**

| Compositions | A | B | C | D |
|---|---|---|---|---|
| Beta Clinker (%) | 40 | 60 | 40 | |
| CSA Clinker (%) | 40 | 30 | | |
| Belite Clinker (%) | | | 40 | |
| Sulfobelite Clinker (%) | | | | 90 |
| Anhydrite (%) | 20 | 10 | 20 | 10 |
| Water/cement ratio | 0.5 | 0.45 | 0.5 | 0.5 |
| Workability (min.) | 60 | 120 | 30 | 20 |
| Flow (%) | 180 | 270 | 160 | Nd |
| 8h compression strength (MPa) | 28 | 11 | 6 | 4 |
| 24h compression strength (MPa) | 39 | 21 | 13 | 12 |
| 28 day compression strength (MPa) | 52 | 49 | 28 | 25 |
| 90 day shrinkage (µm/m) | 235 | 240 | 465 | 450 |

**TABLE II**

| Characteristics of the materials indicated in Table I | | | |
|---|---|---|---|
| | Beta Clinker | CSA Clinker | Sulfobelite Clinker |
| C4A3$ | 2% | 52% | 21% |
| Beta-C2S | 67% | 24% | 60% |
| C3S | 4% | 2% | 1% |
| Anhydrite | | 1% | 1% |
| Other phases | 17% | 21% | 17% |
| | | | |
| Fineness (Blaine g/cm²) | 3300 | 4400 | 4000 |

As will be seen from the data included in Table I, the mixture according to the invention is decidedly advantageous in that it develops high mechanical strength in a short time while being substantially free from C3S. Also medium term mechanical strength values - that is after 28 days - are excellent, in particular bearing in mind the high water/cementitious mixture ratios used, which are equivalent to those normal in practical applications, and the absence of fluidising additives. The latter may however be added, for example in a quantity of up to 2% by weight, when it is intended to manufacture mortars having a very low water/cement ratio. The comparatively high concentration of SO₃ in mixtures A and B according to the invention in comparison with comparison mixture C is critical for development of the abovementioned strengths, that is a concentration which stabilises β-C2S, the hydraulically active component. In addition to this, the mixtures obtained by mixing beta clinker and sulfoaluminate clinker are more reactive and have less shrinkage in comparison with mixture D obtained by grinding a single clinker incorporating corresponding mineralogical phases.

It has therefore been experimentally demonstrated that this invention overcomes the technical problem of providing a cementitious mixture which once mixed with the quantities of water usual in practice develops excellent mechanical strength values in the short/medium term, with little shrinkage. If necessary these values may be further increased by adding fumed silica, which is in any event an optional and inessential component. This is in fact surprising, because according to the article by M. Mikoc et al, "Effect of Calcium Sulfoaluminate and Gypsum Addition on the Strength Development of Belite Cement" in American Ceramic Society Bulletin, American Ceramic Society, Columbus, US, vol. 71, no. 7, 1st January 1992, the addition of gypsum and calcium sulfoaluminate to belite cements is ineffective in the absence of fumed silica. The combination of belite clinker and sulfoaluminate clinker is also the most convenient solution from the energy and environmental points of view, because the binder according to this invention has advantageous properties in terms of the reduced quantity of CO₂ emitted and energy consumed in the corresponding production cycle in comparison with Portland cement.

Of course, without affecting the principle of the invention details of implementation and embodiments may be widely varied from what has been described purely by way of example without thereby going beyond the scope of the invention as defined by the appended claims. For example the ranges for the water/cement ratio of mortars according to the invention having any combination of the values for the upper and lower limits indicated above are to be considered as being explicitly described in this description.

## Claims

1. Cementitious mixture comprising beta clinker in an amount in the range 25 to 65 % by weight, sulfoaluminate clinker in an amount in the range 65 to 25 % by weight, and calcium sulfate in an amount in the range 10 to 20 % by weight, said beta clinker having a β-C2S content > 65% by weight, an SO₃ content > 4% by weight, a C3S content < 10% by weight and the said sulfoaluminate clinker having a C4A3$ content > 45% by weight.

2. Cementitious mixture according to claim 1, in which the said clinker has a C4A3$ content < 5% by weight and preferably < 3% by weight.

3. Cementitious mixture according to claim 1 or 2, further comprising CaO and/or Ca(OH)₂ in an amount up to 5 % by weight.

4. Cementitious mixture according to any one of the preceding claims, further comprising a lithium salt in an amount up to 1 % by weight.

5. Cementitious mixture according to any one of the preceding claims, further comprising a retardant in an amount up to 2 % by weight.

6. Cementitious mixture according to any one of the preceding claims, further comprising a fluidising additive in an amount up to 2 % by weight.

7. Cementitious mixture according to any one of the preceding claims, further comprising a calcareous filler in an amount up to 15 % by weight.

8. Cementitious mixture according to any one of the preceding claims, in which the said clinker has a CaF₂ content of more than 0 but not more than 1% by weight.

9. Cementitious mixture according to any one of the preceding claims, containing no fumed silica.

10. Mortar containing water and cementitious mixture according to any one of the preceding claims in a water/cementitious mixture ratio by weight of between 0.30 and 0.65, preferably between 0.32 and 0.60, and again more preferably between 0.45 and 0.55.

## Patentansprüche

1. Zementartiges Gemisch, umfassend Beta-Klinker in einer Menge im Bereich von 25 bis 65 Gew.-%, Sulfoaluminatklinker in einer Menge im Bereich von 65 bis 25 Gew.-% und Calciumsulfat in einer Menge im Bereich von 10 bis 20 Gew.-%, wobei der Beta-Klinker einen β-C2S-Gehalt > 65 Gew.-%, einen SO₃-Gehalt > 4 Gew.-%, einen C3S-Gehalt < 10 Gew.-% aufweist und wobei der Sulfoaluminatklinker einen C4A3$-Gehalt > 45 Gew.-% aufweist.

2. Zementartiges Gemisch nach Anspruch 1, bei dem der Klinker einen C4A3$-Gehalt < 5 Gew.-% und vorzugsweise < 3 Gew.-% aufweist.

3. Zementartiges Gemisch nach Anspruch 1 oder 2, das ferner CaO und/oder Ca(OH)₂ in einer Menge bis zu 5 Gew.-% aufweist.

4. Zementartiges Gemisch nach einem der vorhergehenden Ansprüche, das ferner ein Lithiumsalz in einer Menge bis zu 1 Gew.-% umfasst.

5. Zementartiges Gemisch nach einem der vorhergehenden Ansprüche, das ferner ein Verzögerungsmittel in einer Menge bis zu 2 Gew.-% umfasst.

6. Zementartiges Gemisch nach einem der vorhergehenden Ansprüche, das ferner ein Fluidisierungsadditiv in einer Menge bis zu 2 Gew.-% umfasst.

7. Zementartiges Gemisch nach einem der vorhergehenden Ansprüche, das ferner einen kalkenthaltenden Füllstoff in einer Menge bis zu 15 Gew.-% umfasst.

8. Zementartiges Gemisch nach einem der vorhergehenden Ansprüche, bei dem der Klinker einen CaF₂-Gehalt von mehr als 0, jedoch nicht mehr als 1 Gew.-% aufweist.

9. Zementartiges Gemisch nach einem der vorhergehenden Ansprüche, das keinen Kieselpuder enthält.

10. Mörtel, der Wasser und ein zementartiges Gemisch nach einem der vorhergehenden Ansprüche in einem Gewichtsverhältnis von Wasser/zementartiges Gemisch von zwischen 0,30 und 0,65, vorzugsweise zwischen 0,32 und 0,60 und noch mehr bevorzugt zwischen 0,45 und 0,55 enthält.

## Revendications

1. Mélange cimentaire comprenant du clinker béta dans une quantité dans la plage de 25 à 65 % en poids, du clinker sulfoaluminate dans une quantité dans la plage de 65 à 25 % en poids, et du sulfate de calcium dans une quantité dans la plage de 10 à 20 % en poids, ledit clinker béta présentant une teneur en β-028 > 65 % en poids, une teneur en SO₃ > 4 % en poids, une teneur en C3S < 10 % en poids et ledit clinker sulfoaluminate présentant une teneur en C4A3$ > 45 % en poids.

2. Mélange cimentaire selon la revendication 1, dans lequel ledit clinker présente une teneur en C4A3$ < 5 % en poids et de préférence < 3 % en poids.

3. Mélange cimentaire selon la revendication 1 ou 2, comprenant en outre du CaO et/ou Ca(OH)₂ dans une quantité allant jusqu'à 5 % en poids.

4. Mélange cimentaire selon l'une quelconque des revendications précédentes, comprenant en outre un sel de lithium dans une quantité allant jusqu'à 1 % en poids.

5. Mélange cimentaire selon l'une quelconque des revendications précédentes, comprenant en outre un retardateur dans une quantité allant jusqu'à 2 % en poids.

6. Mélange cimentaire selon l'une quelconque des revendications précédentes, comprenant en outre un additif fluidifiant dans une quantité allant jusqu'à 2 % en poids.

7. Mélange cimentaire selon l'une quelconque des revendications précédentes, comprenant en outre une charge calcaire dans une quantité allant jusqu'à 15 % en poids.

8. Mélange cimentaire selon l'une quelconque des revendications précédentes, dans lequel ledit clinker présente une teneur en CaF₂ supérieure à 0 mais inférieure à 1 % en poids.

9. Mélange cimentaire selon l'une quelconque des revendications précédentes, ne contenant pas de silice pyrogénée.

10. Mortier contenant de l'eau et un mélange cimentaire selon l'une quelconque des revendications précédentes dans un rapport eau/mélange cimentaire en poids entre 0,30 et 0,65, de préférence entre 0,32 et 0,60, et de nouveau de manière davantage préférée entre 0,45 et 0,55.
